# EUROPÄISCHE PATENTSCHRIFT

(11) **EP 4 440 718 B1**
(45) Veröffentlichungstag und Bekanntmachung des Hinweises auf die Patenterteilung: **02.12.2026**
(21) Anmeldenummer: 22809422.3
(22) Anmeldetag: 26.10.2022
(51) Int. Cl.: B01D 19/00, C12C 5/00, C12C 7/04, C12C 13/00, C12F 3/00

(54) **VORRICHTUNG UND VERFAHREN ZUR MEDIENFÜHRUNG IN EINER BRAUANLAGE**
DEVICE AND METHOD FOR CONDUCTING MEDIA IN A BREWING SYSTEM
DISPOSITIF ET PROCÉDÉ DE CONDUITE DE MILIEUX DANS UN SYSTÈME D'INFUSION

(30) Priorität: 01.12.2021 DE 102021131549
(43) Veröffentlichungstag der Anmeldung: 09.10.2024
(73) Patentinhaber: Steinecker GmbH, 85356 Freising-Attaching (DE)
(72) Erfinder: LOEFFLAD, Jochen, 85356 Freising (DE); SCHNEID, Ralph, 85356 Freising (DE)
(74) Vertreter: Grünecker Patent- und Rechtsanwälte PartG mbB
(86) Internationale Anmeldenummer: PCT/EP2022/079960
(87) Internationale Veröffentlichungsnummer: WO 2023/099089

(56) Entgegenhaltungen:
- CA-A1- 2 630 143
- DE-A1- 102009 020 912
- DE-A1- 102012 219 964
- DE-A1- 102012 219 966
- US-A1- 2016 015 065
- US-A1- 2017 318 850
- ERASSME F: "Wasserentgasung, Blending, Carbonisierung- [Degassing of water, blending and carbonation. (translated)]", BRAUWELT, NUERNBERG, DE, vol. 138, no. 28/29, 1 January 1998 (1998-01-01), pages 1296 - 1299, XP008165056, ISSN: 0724-696X

## Beschreibung

Die Erfindung betrifft eine Vorrichtung und ein Verfahren zur Medienführung in einer Brauanlage.

Bekanntermaßen werden Produktleitungen im Kaltbereich einer Brauerei nach einer ortsgebundenen Reinigung, auch CIP-Reinigung (Cleaning in Place) genannt, sowie vor und nach jedem Produkttransfer, also beispielsweise zum Transfer von Würze, Hefe oder Bier, in der Regel mit entgastem Wasser ausgeschoben und gespült. Das dafür verwendete und anschließend in den Produktleitungen vorhandene Ausschub-/ Spülwasser wird in der Regel beim jeweils nachfolgenden Produkttransfer auf Kanal ausgeschoben und geht daher im Abwassersystem verloren. Da es sich um entgastes Wasser handelt, geht dann nicht nur das Wasser an sich verloren, sondern auch die zuvor zum Erhitzen (bei der Heißentgasung), Kühlen und Entgasen des Wassers eingesetzte Energie, also zum einen thermische Energie in Form von Wärmeenergie (wie beispielhaft in Dampf und/oder Heißwasser) und Kälteenergie (wie beispielhaft in Glykol und Ammoniak), elektrische Energie beispielsweise zur Erzeugung von Vakuum bei der Vakuumentgasung sowie Energie zum Erzeugen von Kohlendioxid für die Entgasung. Da die Temperaturen der Produkte, wie Hefe, Würze oder Bier, im Kaltbereich der Brauerei relativ niedrig sind, sollte auch das zum Verdrängen des sauerstoffhaltigen Wassers vor der Produktdurchleitung, zum Ausschieben von Produkt aus den Leitungen oder zum Blenden von Bier zu verwendende entgaste Wasser eine entsprechend niedrige Temperatur aufweisen, wofür es oftmals gekühlt werden muss.

Aus der DE 10 2009 020 912 A1 ist eine Vorrichtung zur Medienführung in einer Brauanlage mit folgenden Merkmalen bekannt: wenigstens zwei in einem Kaltbereich der Brauanlage verlaufende Produktleitungen, wobei wenigstens eine davon eine Transferleitung für Jungbier ist; eine Wasserversorgung zum Einspeisen von entgastem Ausschub-/ Spülwasser in die Produktleitungen; und eine Sammelleitung mit Absperrorganen zum Anschluss einzelner Produktleitungen an einen Wassertank.

Die DE 10 2012 219 964 A1 beschreibt ferner ein Verfahren zur Herstellung von sauerstoffarmen Wasser, welches beispielsweise in einem Sudhaus gespeichert und verarbeitet wird, beispielsweise zur Verwendung in einem Maischgefäß oder Läuterbottich.

Aus der DE 10 2010 030 955 A1 ist es zudem bekannt, Ausschubwasser in einem Puffergefäß zu sammeln und anschließend zum Abläutern, zum Einmaischen oder zur Heißtrubentfernung zu verwenden, um dadurch Frischwasser einzusparen.

Charakteristisch für den Kaltbereich einer Brauerei sind die dort vergleichsweise langen Produktleitungen, mit denen auch unterschiedliche Produktionseinheiten, traditionell auch Kellergewerke genannt, miteinander verbunden werden. Beispielsweise handelt es sich bei den Produktleitungen um Abfüllleitungen zwischen Drucktanks und Abfüllanlagen. Zudem sind Produkttransfers und zugeordnete Ausschub-/ Spülvorgänge wegen der üblichen Verarbeitung unterschiedlicher Produkte im Kaltbereich einer Brauerei vergleichsweise häufig, wodurch entsprechend hohe Wasser- und Energieverbräuche für die Ausschübe resultieren.

Es besteht daher der Bedarf für Vorrichtungen und Verfahren, mit denen der oben genannten Problematik entgegengewirkt werden kann.

Die gestellte Aufgabe wird mit einer Vorrichtung nach Anspruch 1 und einem Verfahren nach Anspruch 10 gelöst. Bevorzugte Ausführungsformen sind in den Unteransprüchen angegeben.

Demnach dient die Vorrichtung zur Medienführung in einer Brauanlage und umfasst: wenigstens zwei in einem Kaltbereich der Brauanlage verlaufende Produktleitungen, wobei wenigstens eine der Produktleitungen eine Abfüllleitung zu einer Füllmaschine ist; eine Wasserversorgung zum Einspeisen von entgastem Ausschub-/ Spülwasser in die Produktleitungen; einen Wassertank zum wenigstens anteiligen Zwischenspeichern des eingespeisten Ausschub-/ Spülwassers; eine Sammelleitung mit Absperrorganen zum Anschluss einzelner Produktleitungen an den Wassertank; und eine Entleerleitung zum Anschluss des Wassertanks an eine Maischvorrichtung für deren Versorgung mit dem zwischengespeicherten Ausschubwasser.

Somit ist eine umgehende Wiederverwendung des nach ortsgebundener Reinigung und/oder Bierproduktion in den Produktleitungen vorhandenen Ausschubwassers in Kellergewerken der Brauanlage möglich. Dadurch lässt sich herkömmliches Brauwasser ersetzen.

Je nach Ausgestaltung der beschriebenen Vorrichtung und des damit durchgeführten Verfahrens ist beispielsweise zu erwarten, dass so bei der Bierherstellung 0,3-0,6 hl Wasser pro hl hergestelltem Bier wiederverwendet werden können, was einem Einsparpotential von bis zu 20 % des Gesamtwasserverbrauchs der jeweiligen Brauerei entspricht.

Bei dem Ausschub-/ Spülwasser handelt es sich um entgastes Wasser, das aus einem Prozess zum Ausschieben von Produkt und/oder einem Prozess zum Spülen vor/bei/nach ortsgebundener Reinigung (CIP-Prozess) stammen kann. Nachfolgend wird zugunsten einer besseren Lesbarkeit auch nur von Ausschubwasser gesprochen (stellvertretend für Ausschub-/ Spülwasser). Je nach Zweck der Wiederverwendung kann gegebenenfalls nur Ausschubwasser oder nur Spülwasser gesammelt und zwischengespeichert werden. Hierfür wären auch separate Wassertanks für das Ausschubwasser und Spülwasser anstelle des beschriebenen Wassertanks prinzipiell denkbar.

Unter der Maischvorrichtung kann ein Maischgefäß wie etwa ein Maischbottich, eine Maischpfanne, eine Maischbottichpfanne, oder ein Rohfruchtkocher verstanden werden, jedoch auch ein Einmaischtank, ein Vormaischer, eine Einmaischschnecke, eine Nassschrotmühle oder eine andere Vorrichtung, welche geeignet ist, Wasser für den Maischprozess aufzunehmen oder zuzufügen.

Die Sammelleitung ist vorzugsweise in Form einer Ringleitung (offener bzw. nicht geschlossener Ring) durch sämtliche angeschlossenen Kellergewerke geführt und mit den Produktleitungen an deren ausgangsseitigen Enden, beispielsweise bevor diese in einen CIP-Reinigungskreis münden, oder bevor diese in eine Füllmaschine oder einen dieser zugeordneten Produkttank bzw. Puffertank münden, absperrbar und insbesondere leckagesicher verbunden, beispielsweise mittels Doppelsitzventilen oder durch mit entsprechendem Leckageschutz verschaltete Ventilkombinationen.

Da die Sammelleitung an ihrem ausgangsseitigen Ende mit dem Sammeltank verbunden ist, kann Ausschubwasser bei jedem einzelnen Ausschub in den Sammeltank geleitet werden und muss daher nicht auf Kanal, also in ein Abwassersystem, ausgeschoben werden.

Da es sich bei dem Ausschubwasser um entgastes Wasser handelt, kann dieses vorteilhaft in einem Sudhaus (dem sogenannten Heißbereich der Brauanlage) zum Einmaischen wiederverwendet werden und dort die Brauwasserzufuhr beispielsweise am Wassermischer der Maischvorrichtung ergänzen oder ersetzen. Die Qualität des zwischengespeicherten Ausschubwassers ist somit höherwertiger als diejenige von Brauwasser. Auch gegebenenfalls im Sammeltank vorhandene Produktreste haben erfahrungsgemäß keinen negativen Einfluss auf die Qualität der so erzeugten Maische.

Vielmehr hat sich herausgestellt, dass sich das Einmaischen durch die Verwendung des zwischengespeicherten Ausschubwassers qualitativ sogar verbessern lässt. Dies beruht darauf, dass es sich bei dem zwischengespeicherten Ausschubwasser um entgastes Brauwasser handelt, also gekühltes Frischwasser, welchem Sauerstoff entzogen wurde. Wird ein überwiegender Anteil des herkömmlichen Einmaischwassers, also normales Brauwasser, durch das zwischengespeicherte Ausschubwasser ersetzt, wird der Maische beim Einmaischen aufgrund der vorangegangenen Entgasung des zwischengespeicherten Ausschubwassers weniger Sauerstoff zugeführt, als dies ansonsten üblich ist. Dadurch lassen sich störende Einflüsse von Sauerstoff in der Maische, wie beispielsweise eine Verschlechterung des Stärkeabbaus und/oder Abläuterns, ein verringerter Gehalt an Polyphenolen, Anthocyanogenen und Tannoiden vermeiden, ebenso eine geringere Enzymaktivität.

Die Zwischenspeicherung und Wiederverwendung des entgasten Ausschubwassers ermöglicht eine Rückgewinnung von Energie, die zur Entgasung und zur Kühlung des Ausschubwassers von normaler Kaltwassertemperatur auf beispielsweise 3°C eingesetzt wurde. Durch Sammeln und Wiederverwenden des entgasten und gekühlten Ausschubwassers kann dieses aufgrund seiner Temperaturdifferenz gegenüber dem üblicherweise wärmeren Brauwasser gegebenenfalls in unterschiedlichen Brauereibereichen zur Kühlung verwendet werden. Beispielsweise kann bei der Eiswasserbereitung das entgaste Ausschubwasser verwendet werden um das Brauwasser mit einem Wärmeübertrager (zum Beispiel mit einem Plattenwärmetauscher) vorzukühlen. Somit benötigt man weniger Kälteenergie einer Kälteanlage.

Das gesammelte Ausschubwasser könnte auch einer Würzekühlung zugeführt, also zur Kühlung von Würze verwendet werden. Dafür nötige Kälteenergie kann dadurch eingespart werden, indem das gesammelte Ausschubwasser beispielsweise sogenanntes Eiswasser vollständig oder zumindest teilweise ersetzt. Dabei erwärmt sich das zur Kühlung der Würze verwendete gesammelte Ausschubwasser und kann anschließend in einem Warmwassertank gepuffert und als warmes Brauwasser für die Bierherstellung und/oder Reinigungszwecke verwendet werden.

In der Brauerei kann aufgrund der unterschiedlichen Rezepte, Prozessbedingungen und Umgebungsbedingungen ein Heißwasserüberschuss vorhanden sein. Diesem kann durch Wiederverwendung des zwischengespeicherten Ausschubwassers entgegengewirkt werden, beispielsweise durch Verwendung als entsprechend kälteres Einmaischwasser.

Wie auch voranstehend thematisiert kann Kälteenergie des gesammelten Ausschubwassers zudem über einen an der Entleerleitung vorhandenen Wärmetauscher auf ein Wärmetauschmedium übertragen werden und somit vergleichsweise flexibel in einer Brauerei verwendet werden.

Unter dem Kaltbereich der Brauanlage ist derjenige Bereich der Brauanlage zu verstehen, in dem sich die sogenannten Kellergewerke der Brauanlage befinden, also beispielsweise der Hefe-, Anstell-, Gär-, Lager-, Filter-, und/oder Drucktankkeller sowie die Abfüllerei mit Füllmaschinen zur Abfüllung von Bieren in Flaschen, Dosen, Fässer oder dergleichen Behälter. Unter einer Brauanlage ist diejenige Anlagentechnik zu verstehen, mit der Bier hergestellt werden kann, gegebenenfalls aber auch andere Produkte, wie beispielsweise Biermischgetränke, Kwass, Hard Seltzer oder dergleichen.

Die Abfüllleitung ist als Leitung zu verstehen, in der abfüllfertiges Bier zu einer Füllmaschine geleitet wird. Zu diesem Zweck kann die Abfüllleitung zu einem der Füllmaschine vorgeschalteten Puffertank führen, der dann vorzugsweise im Bereich der Füllmaschine angeordnet ist.

Vorzugsweise umfassen die Produktleitungen neben der voranstehend genannten Abfüllleitung ferner wenigstens eine weitere Abfüllleitung zu einer weiteren Füllmaschine, eine Hefeabgabeleitung, eine Hefeernteleitung, eine Bierleitung zu einem Bierfilter und/oder eine Bierleitung zum Verbinden von Biertanks untereinander, wie beispielsweise eine sogenannte Grünbierleitung (Leitung für Jungbier). Das heißt, insgesamt sind wenigstens zwei Produktleitungen aus der Gruppe der oben genannten Leitungstypen ausgangsseitig an die Sammelleitung angeschlossen. Somit kann zum Produkttransfer dienendes Ausschubwasser aus unterschiedlichen Kellergewerken in der Sammelleitung auf vergleichsweise flexible Weise gesammelt und dem Wassertank zur Zwischenspeicherung des Ausschubwassers zugeführt werden.

Vorzugsweise sind die Produktleitungen, insbesondere diejenigen, die keine Abfüllleitungen sind, an ihren ausgangsseitigen Endbereichen an die Sammelleitung angeschlossen. Folglich kann ein Großteil des in der jeweiligen Produktleitung vorhandenen Ausschubwassers zurückgewonnen werden.

Unter den ausgangsseitigen Endbereichen ist zu verstehen, dass der Anschluss an die Sammelleitung beispielsweise höchstens 2 m vor Ende der jeweiligen Produktleitung an diese angeschlossen ist. Die Produktleitung endet beispielsweise an einem Gully, insbesondere dem in Ausschubrichtung letzten Gully, und/oder einem Anschluss zu einem Reinigungskreislauf, insbesondere an dessen Rücklauf.

Alternativ können einzelne Produktleitungen, insbesondere diejenigen, die Abfüllleitungen sind, beispielsweise in ihren ausgangsseitigen Endbereichen über eine CIP-Leitung (Leitung eines CIP-Reinigungskreises), insbesondere über eine CIP-Rücklaufleitung, an die Sammelleitung angeschlossen sein. Die CIP-Leitung ist dann als zuschaltbare Verlängerung der Sammelleitung oder Produktleitung ausgebildet. Dadurch lässt sich die zum Anschluss der jeweiligen Abfüllleitung erforderliche Länge der Sammelleitung reduzieren. Dies ist auch deshalb vorteilhaft, da Abfüllleitungen sehr lang sein können und die Sammelleitung ansonsten entsprechend lang ausgelegt werden muss, was den apparativen Aufwand und zugehörige Kosten in unerwünschter Weise erhöht. Anders gesagt kann so eine vorhandene CIP-Leitung, insbesondere eine CIP-Rücklaufleitung, gegebenenfalls aber auch eine CIP-Vorlaufleitung, zur Rückführung von Ausschubwasser verwendet werden.

Vorzugsweise sind die Produktleitungen mittels leckagesicherer Absperrorgane an die Sammelleitung angeschlossen. Bei den Absperrorganen handelt es sich beispielsweise um Ventile, Ventilkombinationen, Klappen, Schieber und/oder Hähne. Besonders vorteilhaft sind hierfür Doppelsitzventile. Somit ist ein leckagefreier und wahlweiser Anschluss der einzelnen Produktleitungen an die Sammelleitung gegeben.

Vorzugsweise ist die Sammelleitung als insbesondere vollständig durch den Kaltbereich verlaufende Ringleitung ausgebildet, wobei die Produktleitungen entsprechend nacheinander in die Sammelleitung münden. Dies ermöglicht eine einfache Leitungsführung durch den Kaltbereich. Bezüglich des Wassertanks kann die Sammelleitung als eingangsseitige Ringleitung verstanden werden und ist dann als nicht geschlossener Ring ausgebildet. Die Produktleitungen könnten entsprechend als Stichleitungen bezüglich der Sammelleitung verstanden werden.

Vorzugsweise ist die Sammelleitung an einen Reinigungskreis zur ortsgebundenen Reinigung (CIP-Reinigung) und, insbesondere über die Entleerleitung, an den Wassertank leckagesicher und separat absperrbar angeschlossen. Der leckagesichere Anschluss erfolgt beispielsweise mit einem leckagesicheren Ventil oder einer leckagesicheren Ventilkombination, insbesondere mit einem Doppelsitzventil. Somit lässt sich die Sammelleitung unabhängig von den Produktleitungen, dem Wassertank und/oder der Entleerleitung automatisch reinigen, beispielsweise durch CIP-Heißreinigung.

Das ausgangsseitige Ende der Sammelleitung kann beispielsweise mit Ventilen an den Wassertank und an den Rücklauf eines Reinigungskreises angeschlossen sein. Der Vorlauf des Reinigungskreises (CIP-Vorlauf) ist dann mittels eines Ventils entsprechend leckagesicher mit dem eingangsseitigen Ende der Sammelleitung verbunden. Somit ist eine ortsgebundene Reinigung in Fließrichtung des Ausschubwassers möglich. Eine entsprechende Reinigung der Sammelleitung in entgegengesetzter Richtung wäre durch umgekehrten Anschluss an den Reinigungskreis aber prinzipiell ebenso denkbar.

Vorzugsweise ist die Entleerleitung als ausgangsseitige Ringleitung (offener Ring) mit einem absperrbaren Leitungsabzweig zur Maischvorrichtung bzw. einer zugehörigen Einmaischvorrichtung ausgebildet. Das gesammelte Ausschubwasser kann dadurch einem eingangsseitigen Wassermischer der Maischvorrichtung / Einmaischvorrichtung zugeführt werden, beispielsweise zum Zumischen des Ausschubwassers zum Einmaischwasser und somit zu Schrot und/oder Maische.

Die ausgangsseitige Ringleitung kann ferner wenigstens einen absperrbaren Leitungsabzweig zu einem Reinigungskreislauf zur ortsgebundenen Reinigung (CIP-Reinigung) aufweisen. Beispielsweise kann so ein Reinigungskreislauf in einem Sudhaus und/oder ein Reinigungskreislauf an einer Produktionseinheit im Kaltbereich der Brauanlage, wie zum Beispiel einer Anlage zum Bier-Blending, gezielt mit Wasser versorgt werden. Die ausgangsseitige Ringleitung mit entsprechend nacheinander angeordneten Leitungsabzweigen kann als Verteilleitung für das gesammelte Ausschubwasser verstanden werden. Dieses kann folglich flexibel für unterschiedliche Einsatzzwecke wiederverwendet werden.

Vorzugsweise umfasst der jeweilige Leitungsabzweig dann ausgangsseitig ein leckagesicheres Ventil oder eine leckagesichere Ventilkombination, insbesondere ein Doppelsitzventil, zur Verteilung des Ausschubwassers. Anders gesagt bildet die Entleerleitung dann einen aus mehreren leckagesicheren Ventilen aufgebauten Verteiler für das zwischengespeicherte Ausschubwasser.

Die gestellte Aufgabe wird ebenso mit einer Brauanlage gelöst, welche die Vorrichtung gemäß wenigstens einer der beschriebenen Ausführungsformen umfasst sowie wenigstens eine Entgasungseinheit zur Entgasung des Ausschubwassers und eine Maischvorrichtung zur wenigstens anteiligen Verwendung des zwischengespeicherten Ausschubwassers. Ferner kann die Brauanlage wenigstens eine Füllmaschine und/oder wenigstens ein Reinigungskreis zur ortsgebundenen Reinigung (CIP-Reinigung) der Sammelleitung umfassen. Die Entgasungseinheit, Maischvorrichtung, Füllmaschine und der Reinigungskreis sind dann gegebenenfalls auf die beschriebene Weise an die Vorrichtung angeschlossen. Damit lässt sich das entgaste Ausschubwasser besonders effizient sammeln und wiederverwenden.

Das beschriebene Verfahren dient zur Medienführung in einer Brauanlage, wobei entgastes Ausschubwasser in einem Kaltbereich der Brauanlage wahlweise aus im Kaltbereich verlaufenden Produktleitungen in einen Wassertank geleitet, dort gesammelt und einem Produktionsprozess zum Einmaischen zugeführt wird. Wenigstens eine der Produktleitungen führt zu einer Füllmaschine. Damit lassen sich die bezüglich des Anspruchs 1 beschriebenen Vorteile erzielen.

Das gesamte zum Maischen benötigte Wasser wird beispielsweise beim Einmaischen (Vermischen von Schrot / Rohstoff und Wasser) zugegeben, gegebenenfalls aber auch während des Maischprozesses nach und nach. Das heißt, wenn hier von Einmaischen gesprochen wird, so ist damit auch die spätere Zugabe von Wasser zum Maischprozess umfasst.

Vorzugsweise wird das entgaste Ausschubwasser über eine gemeinsame Sammelleitung innerhalb des Kaltbereichs zum Wassertank geführt, wobei die Produktleitungen umfassen: eine erste und/oder zweite und/oder dritte Abfüllleitung zu je einer Füllmaschine; eine Hefeabgabeleitung; eine Hefeemteleitung; eine Bierleitung für zu filtrierendes und/oder stabilisierendes Bier und/oder eine Bierleitung zum Verbinden von Biertanks (beispielhaft die sogenannte Grünbierleitung) untereinander. Das heißt, für das Verfahren werden insgesamt wenigstens zwei Produktleitungen aus der Gruppe der oben genannten Typen verwendet.

Das Ausschubwasser kann in die Sammelleitung über Absperrorgane entweder direkt aus der jeweiligen Produktleitung, insbesondere aus deren ausgangsseitigen Endbereich, eingespeist werden oder indirekt durch Zwischenschalten einer CIP-Leitung, beispielsweise einer CIP-Rücklaufleitung, insbesondere, falls es sich bei der betroffenen Produktleitung um eine Abfüllleitung handelt.

Vorzugsweise wird das entgaste Ausschubwasser aus dem Wassertank wahlweise einem CIP-Prozess in einem Sudhaus der Brauanlage und/oder zur Reinigung einer Produktionseinheit im Kaltbereich der Brauanlage, zum Beispiel einer Bier-Blending-Anlage, zugeführt, insbesondere zur Spülung vor und/oder nach ortsgebundener (CIP) Lauge- oder Säurereinigung. Das heißt, das zwischengespeicherte entgaste Ausschubwasser kann ergänzend oder alternativ zur Verwendung beim Einmaischen auch für andere regelmäßig in der Brauanlage anfallende Reinigungsprozesse oder gegebenenfalls auch für weitere Produktionsprozesse eingesetzt werden.

Vorzugsweise ersetzt man Brauwasser zum Einmaischen zumindest anteilig durch das gesammelte entgaste Ausschubwasser. Dadurch lässt sich nicht nur der Verbrauch von Brauwasser für das Einmaischen reduzieren, sondern auch die Produktqualität durch die Verwendung des entgasten Ausschubwassers aufgrund seines reduzierten Sauerstoffgehalts positiv beeinflussen.

Vorzugsweise ist das Ausschubwasser in einem vorgelagerten Entgasungsprozess insbesondere auf einen Sauerstoffgehalt von höchstens 0,1 mg/l entgastes und/oder in einem vorgelagerten Kühlprozess insbesondere auf eine Temperatur von höchstens 8°C gekühltes Frischwasser. Dadurch ist eine besonders effiziente Wiederverwendung hinsichtlich energetischer Gesichtspunkte und/oder hinsichtlich der Produktqualität möglich.

Das entgaste Ausschubwasser ist beispielsweise infolge eines Ausschiebens von Produkt oder Reinigungsflüssigkeit in der jeweiligen Produktleitung vorhanden. Das Verfahren lässt sich somit flexibel mit unterschiedlichen Produktionsprozessen und Reinigungsprozessen kombinieren.

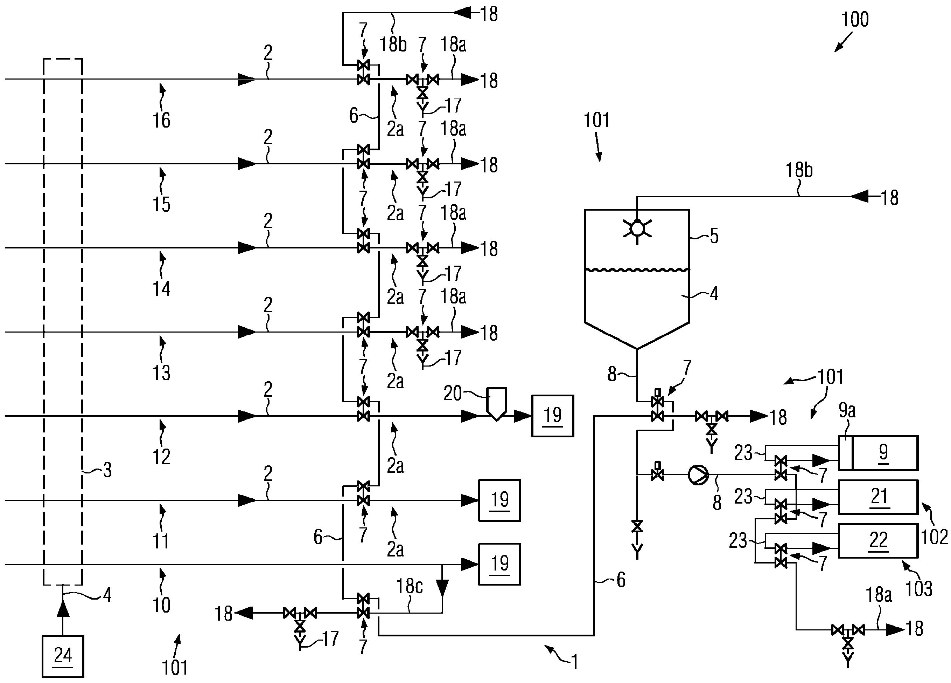

Eine bevorzugte Ausführungsform der Erfindung ist zeichnerisch dargestellt. Die einzige Figur zeigt ein Fließschema der Vorrichtung.

Wie die Figur erkennen lässt, umfasst die Vorrichtung 1 zur Medienführung in einer Brauanlage 100 gemäß einer bevorzugten Ausführungsform mehrere in einem Kaltbereich 101 der Brauanlage 100 verlaufende Produktleitungen 2, eine (schematisch angedeutete) Wasserversorgung 3 zum wahlweisen Einspeisen entgasten Ausschubwassers 4 in die Produktleitungen 2, einen Wassertank 5 (Sammeltank) zum wenigstens anteiligen Zwischenspeichern des eingespeisten Ausschubwassers 4 und eine diesbezüglich eingangsseitige Sammelleitung 6 mit leckagesicheren Absperrorganen 7 zum Anschluss der einzelnen Produktleitungen 2 an den Wassertank 5 über die Sammelleitung 6.

Ferner umfasst die Vorrichtung 1 eine Entleerleitung 8 zum Ausleiten des zwischengespeicherten Ausschubwassers 4 aus dem Wassertank 5. Die Entleerleitung 8 ist mittels vorzugsweise leckagesicherer Absperrorgane 7 zum einen an die Sammelleitung 6 und zum anderen wenigstens an eine Maischvorrichtung 9 mit einem optionalen eingangsseitigen Wassermischer 9a angeschlossen, mit dem herkömmliches Brauwasser (nicht dargestellt) und/oder das entgaste Ausschubwassers 4 zum Einmaischen eingespeist werden kann. Alternativ oder zusätzlich zum Wassermischer 9a könnte das Ausschubwasser 4 in der Maischvorrichtung 9 vorgelegt werden.

Eine leckagesichere Ausgestaltung der Absperrorgane 7 ist vor allem im Zusammenhang mit einer ortsgebundenen Reinigung (CIP) vorteilhaft, zur Durchführung des beschriebenen Verfahrens aber nicht zwingend erforderlich.

Bei den Produktleitungen 2 handelt es sich zum Beispiel um eine erste Abfüllleitung 10, eine zweite Abfüllleitung 11 (jeweils beispielhaft zu einer Flaschenabfüllung), eine dritte Abfüllleitung 12 (beispielhaft zu einer Dosenabfüllung oder einer weiteren Flaschenabfüllung), eine Hefeabgabeleitung 13, eine Hefeernteleitung 14, eine erste Bierleitung 15 zu einem Bierfilter (nicht dargestellt) und eine zweite Bierleitung 16 zum Verbinden von Biertanks (nicht dargestellt), beispielhaft die sogenannte Grünbierleitung, untereinander.

Die Produktleitungen 2 verlaufen von den jeweiligen Produktionseinheiten / Kellergewerken (nicht dargestellt) innerhalb des Kaltbereichs 101 und sind dort vorzugsweise an ihren bezüglich Fließrichtung (Pfeile) des Ausschubwassers 4 ausgangsseitigen Endbereichen 2a an die Sammelleitung 6 angeschlossen. Dadurch lässt sich das in der jeweiligen Produktleitung 2 vorhandene Ausschubwasser 4 nahezu vollständig über die Sammelleitung 6 der Zwischenspeicherung im Wassertank 5 / Wiederverwendung über die Entleerleitung 8 zuführen. Es versteht sich, dass Ausschubwasser 4 über die Entleerleitung 8 je nach Verfahrensschritt zugeführt oder abgeführt werden kann.

Unter den Kellergewerken bzw. den Produktionseinheiten im Kaltbereich 101 sind beispielsweise zu verstehen: Lagertanks in Lagerkellern; Bierfilter in Filterkellern; Flotationstanks; Anstelltanks; Gärtanks; Hefelagertanks; Hefebelüftungen; Separatoren; Grünbierkühler; Bier-Blending-Anlagen; Anlagen zum Hopfenstopfen; Dosieranlagen; und/oder Ausmischanlagen.

Im Fall der Hefeabgabeleitung 13, der Hefeernteleitung 14 und der Bierleitungen 15, 16 befindet sich der Endbereich 2a beispielsweise unmittelbar (beispielsweise höchstens 2 m) stromaufwärts eines Abzweigs zu einem Gully 17 (oder funktional entsprechenden Abwasserablauf) und/oder einem Anschluss an einen CIP-Reinigungskreis 18, hier jeweils an dessen Rücklauf 18a.

Im Fall der Abfüllleitungen 10, 11, 12 befindet sich der Endbereich 2a beispielsweise unmittelbar (beispielsweise höchstens 2 m) stromaufwärts einer zugeordneten Füllmaschine 19 oder eines dieser vorgeschalteten Puffertanks 20 für abfüllfertiges Bier. Dies ist in der Figur beispielhaft in unterschiedlichen Varianten zum einen für die erste und zweite Abfüllleitung 10, 11 und zum anderen für die dritte Abfüllleitung 12 angedeutet.

Deren Anschlüsse an die Sammelleitung 6 über Absperrorgane 7 sind prinzipiell direkt möglich, wie im Fall der zweiten und dritten Abfüllleitung 11, 12 beispielhaft dargestellt ist, und/oder indirekt mittels einer zwischengeschalteten CIP-Leitung 18c, wie im Fall der ersten Abfüllleitung 10 beispielhaft dargestellt ist.

Bei der CIP-Leitung 18c handelt es sich (ausgehend von einer üblichen Leitungsführung von CIP-Kreisen) vorzugsweise um eine CIP-Rücklaufleitung. Die zwischengeschaltete CIP-Leitung 18c könnte prinzipiell aber auch eine CIP-Vorlaufleitung sein. Auch könnte wenigstens eine der Produktleitungen 2 über eine solche CIP-Rücklaufleitung und wenigstens eine andere der Produktleitungen 2 über eine solche CIP-Vorlaufleitung an die Sammelleitung 6 angeschlossen sein.

Dieser indirekte / mittelbare Anschluss ist für wenigstens eine und insbesondere jede der Abfüllleitungen 10, 11, 12 vorteilhaft, da die Sammelleitung 6 dann nicht bis zur jeweiligen Abfüllleitung 10, 11, 12, insbesondere in deren Endbereich 6a, geführt werden muss. Dies hat insofern besondere Bedeutung, da die Abfüllleitungen 10, 11, 12 relativ lang sein können und die zugehörigen Füllmaschinen 19 und/oder Puffertanks 20 dann entsprechend weit von den Endbereichen 2a der anderen Produktleitungen 2 entfernt sein können. Die Vorrichtung 1 kann durch den Anschluss der Sammelleitung 6 an wenigstens eine Abfüllleitung 10, 11, 12 über eine jeweils zugeordnete CIP-Leitung 18c mit relativ geringem Aufwand in die Brauanlage 100 integriert werden.

In entsprechender Weise könnte auch wenigstens eine andere Produktleitung 2, wie beispielsweise die Hefeabgabeleitung 13, die Hefeernteleitung 14, die erste Bierleitung 15 und/oder die zweite Bierleitung 16, so lang bzw. so weit von der Sammelleitung 6 entfernt sein, dass ein indirekter / mittelbarer Anschluss mittels einer CIP-Leitung 18c im obigen Sinne vorteilhaft und daher in der Vorrichtung 1 vorhanden ist.

Die gesamte Sammelleitung 6 kann innerhalb des Kaltbereichs 101 verlaufen und ist als Ringleitung (offener Ring) ausgebildet, an die die Produktleitungen 2 nacheinander und getrennt voneinander mittels der vorzugsweise leckagesicheren Absperrorgane 7 angeschlossen sind. Hierzu kann die Sammelleitung 6 ringförmig durch die Bereiche sämtlicher angeschlossener Kellergewerke führen. Es versteht sich, dass der Kaltbereich 101 auch mehrere Gebäude und/oder Bereiche im Freien umfassen kann. Zudem könnte die Sammelleitung 6 teilweise auch durch einen Heißbereich (das Sudhaus 102) verlaufen, beispielsweise aufgrund einer Anlagenerweiterung.

Bei leckagesicheren Absperrorganen 7 handelt es sich um entsprechend arbeitende Ventile, Ventilkombinationen, Klappen, Schieber und/oder Hähne, vorzugsweise um Doppelsitzventile.

Die Sammelleitung 6 ist mittels wenigstens eines Absperrorgans 7 femer vorzugsweise leckagesicher an den Vorlauf 18b des CIP-Reinigungskreises 18 angeschlossen. Die Anschlüsse an den jeweiligen Rücklauf 18a und Vorlauf 18b könnten prinzipiell auch miteinander vertauscht werden, das heißt es ist möglich, in Produktfließrichtung oder dieser entgegengesetzt zu reinigen. In jedem Fall ist mit dem CIP-Reinigungskreis 18 eine separate ortsgebundene Reinigung der Sammelleitung 6 möglich, beispielsweise deren automatische CIP-Heißreinigung.

Schematisch und lediglich beispielhaft angedeutet sind in der Figur zudem eine erste CIP-Anlage 21 zur ortsgebundenen Reinigung (CIP-Reinigung) eines Sudhauses 102 und eine zweite CIP-Anlage 22 zur ortsgebundenen Reinigung einer Produktionseinheit im Kaltbereich 101 der Brauanlage 100, zum Beispiel einer Bier-Blending-Anlage 103. Diese sind ebenso wie die Maischvorrichtung 9 mittels Absperrorganen 7 vorzugsweise leckagesicher an die Entleerleitung 8 angeschlossen. Die Entleerleitung 8 kann somit auch als Verteilleitung für das im Wassertank 5 zwischengespeicherte Ausschubwasser 4 angesehen werden.

Die Entleerleitung 8 kann (wie die Sammelleitung 6) als vollständig innerhalb des Kaltbereichs 101 verlaufende Ringleitung (offener Ring) ausgebildet sein, von der mittels der Absperrorgane 7 absperrbare Leitungsabzweige 23 nacheinander zur Maischvorrichtung 9 und den CIP-Anlagen 21, 22 führen. Ringleitungen ermöglichen eine vergleichsweise einfache und effiziente Leitungsführung für das Ausschubwasser 4.

Es versteht sich hierbei, dass die Vorrichtung 1 anstelle des einzigen dargestellten Wassertanks 5 auch mehrere parallel geschaltete Wassertanks 5 (Sammeltanks) je nach deren Kapazität und der Menge des zwischenzuspeichernden Ausschubwassers 4 umfassen könnte. Auch wären getrennte Wassertanks 5 beispielsweise für infolge eines Produktwechsels zu sammelndes Ausschubwasser 4 und infolge eines CIP-Prozesses zu sammelndes Spülwasser denkbar, die dann leckagesicher und in separat absperrbarer Parallelschaltung eingebunden werden könnten. Prinzipiell eignen sich die Vorrichtung 1 und das beschriebene Verfahren aber sowohl für jeweils in den Produktleitungen 2 vorhandenes Ausschubwasser 4 als auch Spülwasser, so dass generell von Ausschub-/ Spülwasser 4 gesprochen werden kann.

Als Bestandteil der Wasserversorgung 3 ist ferner eine in der Brauanlage 100 vorhandene Entgasungseinheit 24 zur Entgasung des von der Wasserversorgung 3 bereitgestellten Ausschubwassers 4 schematisch angedeutet. Die Wasserversorgung 3 dient somit der Erzeugung / Bereitstellung des entgasten Ausschubwassers 4 und zu dessen Verteilung über ein zugehöriges Leitungsnetz.

Mit der Vorrichtung 1 kann beispielsweise wie folgt gearbeitet werden. Das Ausschubwasser 4 wird in einem vorgelagerten Entgasungsprozess, beispielsweise in der Entgasungseinheit 24, auf einen Sauerstoffgehalt von vorzugsweise höchstens 0,1 mg/l entgast und gegebenenfalls zudem in einem vorgelagerten Kühlprozess beispielsweise auf eine Temperatur von höchstens 8°C auf prinzipiell bekannte Weise abgekühlt.

Das Ausschubwasser 4 ist dann beispielsweise in Folge eines Ausschiebens von Produkt aufgrund eines Produktwechsels in der jeweiligen Produktleitung 2 vorhanden. Im Zuge des Produktwechsels wird das vorhandene Ausschubwasser 4 durch Öffnen des jeweiligen Absperrorgans 7 aus der betroffenen Produktleitung 2 in die Sammelleitung 6 und über diese in den Wassertank 5 zur dortigen Zwischenspeicherung geleitet. Je nach Prozessablauf könnte das gesammelte Ausschubwasser 4 zumindest anteilig auch direkt in die Entleerleitung 8 durch geeignete Stellung der Absperrorgane 7 geleitet werden, um beispielsweise einen Maischprozess mit dem gesammelten Ausschubwasser 4 zu versorgen.

Das gesammelte Ausschubwasser 4 kann wahlweise als Ersatz für herkömmliches Brauwasser zum Einmaischen in der Maischvorrichtung 9 verwendet werden, gegebenenfalls aber auch für einen CIP-Prozess (ortsgebundene Reinigung), beispielsweise zur Spülung vor und/oder nach Lauge-/ Säurereinigung. Entsprechende Spülschritte könnten sowohl im Bereich eines Sudhauses ablaufen als auch im Bereich einer Produktionseinheit im Kaltbereich 101 der Brauanlage 100 wie beispielhaft einer Bier-Blending-Anlage 103.

Mit Hilfe der leckagesicheren Absperrorgane 7, von denen vorzugsweise zumindest einige als Doppelsitzventile ausgebildet sind, lässt sich das entgaste und gegebenenfalls auch gekühlte und somit vergleichsweise wertvolle Ausschubwasser 4 gezielt und nahezu vollständig aus den einzelnen Produktleitungen 4 sammeln und für eine geeignete Weiterverwendung im Wassertank 5 zwischenspeichem.

Da das Ausschubwasser 4 ausschließlich im Kaltbereich 101 gesammelt, zwischengespeichert und zur Wiederverwendung verteilt wird, lässt sich die zum Kühlen und Entgasen des Ausschubwassers 4 zuvor eingesetzte Energie gezielt bei der Wiederverwendung des Ausschubwassers 4 einsetzen. Zudem kann der vergleichsweise geringe Sauerstoffgehalt des entgasten und zwischengespeicherten Ausschubwassers 4 vorteilhaft für bestimmte Produktionsprozesse beim Bierbrauen eingesetzt werden, beispielsweise beim Einmaischen in der Maischvorrichtung 9. Somit lässt sich nicht nur eine energieeffiziente Produktion erzielen, sondern auch die Produktqualität gegebenenfalls durch Verwendung entgasten Ausschubwassers 4 verbessern.

Die beschriebenen Vorteile lassen sich sowohl hinsichtlich der Vorrichtung als auch hinsichtlich des Verfahrens durch die beschriebene, insbesondere leckagesichere Verschaltung der Produktleitungen 2, der Sammelleitung 6, des Wassertanks 5 und der Entleerleitung 8 erzielen. Hierfür ist nur ein relativ geringer apparativer Aufwand erforderlich. Die beschriebenen Bestandteile der Vorrichtung 1 können jeweils eine prinzipiell bekannte Bauart aufweisen. Die beschriebene Vorrichtung 1 kann daher gegebenenfalls auch in bestehenden Brauanlagen vergleichsweise kostengünstig nachgerüstet werden und ermöglicht so einen besonders effizienten Braubetrieb.

Damit sich das gesammelte Aussubwasser 4 im Wassertank 5 nicht unnötigerweise erwärmt, kann der Wassertank 5 isoliert werden, auch die Sammelleitung 6, die Entleerleitung 8 und/oder andere in das Verfahren einbezogene Leitungen können isoliert werden.

## Patentansprüche

1. Vorrichtung (1) zur Medienführung in einer Brauanlage (100), umfassend:
- wenigstens zwei in einem Kaltbereich (101) der Brauanlage verlaufende Produktleitungen (2), wobei wenigstens eine davon eine Abfüllleitung (10, 11, 12) zu einer Füllmaschine (19) ist;
- eine Wasserversorgung (3) zum Einspeisen von entgastem Ausschub-/ Spülwasser (4) in die Produktleitungen;
- einen Wassertank (5) zum wenigstens anteiligen Zwischenspeichern des eingespeisten Ausschub-/ Spülwassers (4);
- eine Sammelleitung (6) mit Absperrorganen (7) zum Anschluss einzelner Produktleitungen (2) an den Wassertank (5); und
- eine Entleerleitung (8) zum Anschluss des Wassertanks (5) an eine Maischvorrichtung (9) für deren Versorgung mit dem zwischengespeicherten Ausschub-/ Spülwasser (4).

2. Vorrichtung nach Anspruch 1, wobei die Produktleitungen (2) ferner sind: eine weitere Abfüllleitung (10, 11, 12) zu einer weiteren Füllmaschine (19); eine Hefeabgabeleitung (13); eine Hefeernteleitung (14), eine Bierleitung (15) zu einem Bierfilter; und/oder eine Bierleitung (16) zum Verbinden von Biertanks untereinander.

3. Vorrichtung nach Anspruch 1 oder 2, wobei die jeweilige Produktleitung (2) an ihrem ausgangsseitigen Endbereich (2a) und/oder mittels einer zwischengeschalteten CIP-Leitung (18c), insbesondere einer CIP-Rücklaufleitung, an die Sammelleitung (6) angeschlossen ist.

4. Vorrichtung nach einem der vorigen Ansprüche, wobei die Produktleitungen (2) mittels insbesondere leckagesicherer Absperrorgane (7), insbesondere Doppelsitzventilen, an die Sammelleitung (6) angeschlossen sind.

5. Vorrichtung nach wenigstens einem der vorigen Ansprüche, wobei die Sammelleitung (6) in Form einer durch den Kaltbereich (101) verlaufenden Ringleitung ausgebildet ist und die Produktleitungen (2) nacheinander in die Sammelleitung (6) münden.

6. Vorrichtung nach wenigstens einem der vorigen Ansprüche, wobei die Sammelleitung (6) an einen Reinigungskreis (18) zur ortsgebundenen Reinigung und an den Wassertank (5) separat absperrbar und insbesondere jeweils leckagesicher angeschlossen ist.

7. Vorrichtung nach wenigstens einem der vorigen Ansprüche, wobei die Entleerleitung (8) über einen absperrbaren und insbesondere leckagesicheren Leitungsabzweig (23) an die Maischvorrichtung (9) angeschlossen ist.

8. Vorrichtung nach Anspruch 7, wobei die Entleerleitung (8) als insbesondere vollständig innerhalb des Kaltbereichs (101) verlaufende Ringleitung ausgebildet ist und ferner wenigstens einen jeweils separat absperrbaren und insbesondere jeweils leckagesicheren Leitungsabzweig (23) zu einer CIP-Anlage (21) in einem Sudhaus und/oder zu einer CIP-Anlage (22) einer Produktionseinheit im Kaltbereich (101) der Brauanlage (100) aufweist.

9. Brauanlage (100) umfassend die Vorrichtung nach wenigstens einem der vorigen Ansprüche und, jeweils daran angeschlossen, eine Entgasungseinheit (24) zur Entgasung des Ausschub-/ Spülwassers (4); insbesondere wenigstens eine Füllmaschine (19), wenigstens eine Maischvorrichtung (9) und insbesondere wenigstens einen Reinigungskreis (18) zur ortsgebundenen Reinigung der Sammelleitung (6).

10. Verfahren zur Medienführung in einer Brauanlage (100), wobei entgastes Ausschub-/ Spülwasser (4) in einem Kaltbereich (101) der Brauanlage (100) wahlweise aus im Kaltbereich (101) verlaufenden Produktleitungen (2) in einen Wassertank (5) geleitet, dort gesammelt und einem Produktionsprozess zum Einmaischen zugeführt wird, und wobei wenigstens eine der Produktleitungen (2) zu einer Füllmaschine (19) führt.

11. Verfahren nach Anspruch 10, wobei das entgaste Ausschub-/ Spülwasser (4) über eine gemeinsame Sammelleitung (6) innerhalb des Kaltbereichs (101) zum Wassertank (5) geführt wird, und wobei die Produktleitungen (2) umfassen: eine erste und/oder zweite und/oder dritte Abfüllleitung (10, 11, 12) zu je einer Füllmaschine (19); eine Hefeabgabeleitung (13); eine Hefeernteleitung (14), eine Bierleitung (15) für zu filtrierendes und/oder stabilisierendes Bier; und/ oder eine Bierleitung (16) zum Verbinden von Biertanks untereinander.

12. Verfahren nach Anspruch 10 oder 11, wobei das entgaste Ausschub-/ Spülwasser (4) aus dem Wassertank wahlweise einem CIP-Prozess in einem Sudhaus (102) der Brauanlage (100) und/oder zur Reinigung einer Produktionseinheit im Kaltbereich (101) der Brauanlage (100) zugeführt wird, insbesondere zur Spülung vor und/oder nach Lauge- oder Säurereinigung.

13. Verfahren nach wenigstens einem der Ansprüche 10 bis 12, wobei man Brauwasser zum Eimaischen zumindest anteilig durch das gesammelte entgaste Ausschub-/ Spülwasser (4) ersetzt.

14. Verfahren nach wenigstens einem der Ansprüche 10 bis 13, wobei das Ausschub-/ Spülwasser (4) in einem vorgelagerten Entgasungsprozess insbesondere auf einen Sauerstoffgehalt von höchstens 0,1 mg/l entgastes und/oder in einem vorgelagerten Kühlprozess insbesondere auf eine Temperatur von höchstens 8°C gekühltes Frischwasser ist.

15. Verfahren nach wenigstens einem der Ansprüche 10 bis 14, wobei das entgaste Ausschub- / Spülwasser (4) infolge eines Ausschiebens von Produkt oder Reinigungsflüssigkeit in der jeweiligen Produktleitung (2) vorhanden ist.

## Claims

1. A device (1) for conducting media in a brewing system (100), comprising:
at least two product lines (2) extending in a cold section (101) of the brewing system, wherein at least one thereof is a filling line (10, 11, 12) to a filling machine (19);
a water supply (3) for feeding degassed displacement/rinsing water (4) into the product lines;
a water tank (5) for temporarily storing at least part of the fed displacement/rinsing water (4);
a collecting line (6) having shut-off elements (7) for connecting individual product lines (2) to the water tank (5); and
a discharge line (8) for connecting the water tank (5) to a mashing device (9) for supplying the latter with the temporarily stored displacement/rinsing water (4).

2. The device according to claim 1, wherein the product lines (2) further comprise: a further filling line (10, 11, 12) to a further filling machine (19); a yeast discharge line (13); a yeast harvesting line (14), a beer line (15) to a beer filter; and/or a beer line (16) for interconnecting beer tanks.

3. The device according to claim 1 or 2, wherein the respective product line (2) is connected to the collecting line (6) at its outlet-side end region (2a) and/or by means of an interposed CIP line (18c), in particular a CIP return line.

4. The device according to one of the preceding claims, wherein the product lines (2) are connected to the collecting line (6) by means of shut-off elements (7), in particular leakage-safe shut-off elements, in particular double-seat valves.

5. The device according to at least one of the preceding claims, wherein the collecting line (6) is configured in the form of a ring line extending through the cold section (101), and the product lines (2) open successively into the collecting line (6).

6. The device according to at least one of the preceding claims, wherein the collecting line (6) is connected to a cleaning circuit (18) for cleaning in place and to the water tank (5), so as to be capable of being shut off separately and, in particular, in a leakage-safe manner in each case.

7. The device according to at least one of the preceding claims, wherein the discharge line (8) is connected to the mashing device (9) via a line branch (23) which is capable of being shut off and, in particular, is leakage-safe.

8. The device according to claim 7, wherein the discharge line (8) is configured as a ring line extending, in particular entirely, within the cold section (101), and further comprises at least one line branch (23), which in each case is capable of being shut off separately and, in particular, is leakage-safe, to a CIP system (21) in a brewhouse and/or to a CIP system (22) of a production unit in the cold section (101) of the brewing system (100).

9. A brewing system (100) comprising the device according to at least one of the preceding claims and, connected thereto in each case, a degassing unit (24) for degassing the displacement/rinsing water (4); in particular at least one filling machine (19), at least one mashing device (9) and, in particular, at least one cleaning circuit (18) for cleaning in place of the collecting line (6).

10. A method for conducting media in a brewing system (100), wherein degassed displacement/rinsing water (4) is selectively conducted from product lines (2) extending in a cold section (101) of the brewing system (100) into a water tank (5), collected there and fed to a production process for mashing-in, and wherein at least one of the product lines (2) leads to a filling machine (19).

11. The method according to claim 10, wherein the degassed displacement/rinsing water (4) is conducted via a common collecting line (6) within the cold section (101) to the water tank (5), and wherein the product lines (2) comprise: a first and/or second and/or third filling line (10, 11, 12), each to a filling machine (19); a yeast discharge line (13); a yeast harvesting line (14), a beer line (15) for beer to be filtered and/or stabilising beer; and/or a beer line (16) for interconnecting beer tanks.

12. The method according to claim 10 or 11, wherein the degassed displacement/rinsing water (4) is selectively supplied from the water tank to a CIP process in a brewhouse (102) of the brewing system (100) and/or for cleaning a production unit in the cold section (101) of the brewing system (100), in particular for rinsing before and/or after caustic or acid cleaning.

13. The method according to at least one of claims 10 to 12, wherein brewing water for mashing-in is replaced at least in part by the collected degassed displacement/rinsing water (4).

14. The method according to at least one of claims 10 to 13, wherein the displacement/rinsing water (4) is fresh water that has been degassed in an upstream degassing process, in particular to an oxygen content of at most 0.1 mg/l, and/or cooled in an upstream cooling process, in particular to a temperature of at most 8°C.

15. The method according to at least one of claims 10 to 14, wherein the degassed displacement/rinsing water (4) is present as a result of displacement of product or cleaning liquid in the respective product line (2).

## Revendications

1. Dispositif (1) de conduite de milieux dans une installation de brassage (100), comprenant :
au moins deux conduites de produit (2) s'étendant dans une zone froide (101) de l'installation de brassage, au moins l'une d'entre elles étant une conduite de remplissage (10, 11, 12) vers une machine de remplissage (19) ;
une alimentation en eau (3) pour introduire de l'eau de déplacement/de rinçage dégazée (4) dans les conduites de produit ;
un réservoir d'eau (5) pour stocker temporairement au moins une partie de l'eau de déplacement/de rinçage (4) introduite ;
une conduite collectrice (6) munie d'organes d'arrêt (7) pour raccorder des conduites de produit individuelles (2) au réservoir d'eau (5) ; et
une conduite de vidange (8) pour raccorder le réservoir d'eau (5) à un dispositif d'empâtage (9) afin d'alimenter celui-ci avec l'eau de déplacement/de rinçage (4) stockée temporairement.

2. Dispositif selon la revendication 1, dans lequel les conduites de produit (2) comprennent en outre : une autre conduite de remplissage (10, 11, 12) vers une autre machine de remplissage (19) ; une conduite d'évacuation de levure (13) ; une conduite de récolte de levure (14), une conduite de bière (15) vers un filtre à bière ; et/ou une conduite de bière (16) destinée à relier des cuves à bière entre elles.

3. Dispositif selon la revendication 1 ou 2, dans lequel la conduite de produit respective (2) est raccordée à la conduite collectrice (6) au niveau de sa zone d'extrémité côté sortie (2a) et/ou au moyen d'une conduite CIP interposée (18c), notamment d'une conduite de retour CIP.

4. Dispositif selon l'une des revendications précédentes, dans lequel les conduites de produit (2) sont raccordées à la conduite collectrice (6) au moyen d'organes d'arrêt (7), notamment d'organes d'arrêt à sécurité contre les fuites, en particulier de vannes à double siège.

5. Dispositif selon au moins l'une des revendications précédentes, dans lequel la conduite collectrice (6) est réalisée sous la forme d'une conduite en boucle s'étendant à travers la zone froide (101), et les conduites de produit (2) débouchent successivement dans la conduite collectrice (6).

6. Dispositif selon au moins l'une des revendications précédentes, dans lequel la conduite collectrice (6) est raccordée à un circuit de nettoyage (18) destiné au nettoyage en place et au réservoir d'eau (5), de manière à pouvoir être isolée séparément et, notamment, avec une sécurité contre les fuites dans chaque cas.

7. Dispositif selon au moins l'une des revendications précédentes, dans lequel la conduite de vidange (8) est raccordée au dispositif d'empâtage (9) par l'intermédiaire d'une dérivation de conduite (23) pouvant être isolée et notamment à sécurité contre les fuites.

8. Dispositif selon la revendication 7, dans lequel la conduite de vidange (8) est réalisée sous la forme d'une conduite en boucle s'étendant notamment entièrement à l'intérieur de la zone froide (101), et comprend en outre au moins une dérivation de conduite (23), pouvant dans chaque cas être isolée séparément et notamment à sécurité contre les fuites, vers une installation CIP (21) dans une salle de brassage et/ou vers une installation CIP (22) d'une unité de production dans la zone froide (101) de l'installation de brassage (100).

9. Installation de brassage (100) comprenant le dispositif selon au moins l'une des revendications précédentes et, respectivement raccordés à celui-ci, une unité de dégazage (24) destinée au dégazage de l'eau de déplacement/de rinçage (4) ; notamment au moins une machine de remplissage (19), au moins un dispositif d'empâtage (9) et notamment au moins un circuit de nettoyage (18) destiné au nettoyage en place de la conduite collectrice (6).

10. Procédé de conduite de milieux dans une installation de brassage (100), dans lequel de l'eau de déplacement/de rinçage dégazée (4) est acheminée sélectivement, à partir de conduites de produit (2) s'étendant dans une zone froide (101) de l'installation de brassage (100), vers un réservoir d'eau (5), y est collectée et est acheminée vers un procédé de production destiné à l'empâtage, au moins l'une des conduites de produit (2) menant à une machine de remplissage (19).

11. Procédé selon la revendication 10, dans lequel l'eau de déplacement/de rinçage dégazée (4) est acheminée vers le réservoir d'eau (5) par l'intermédiaire d'une conduite collectrice commune (6) à l'intérieur de la zone froide (101), et dans lequel les conduites de produit (2) comprennent : une première et/ou une deuxième et/ou une troisième conduite de remplissage (10, 11, 12), chacune vers une machine de remplissage (19) ; une conduite d'évacuation de levure (13) ; une conduite de récolte de levure (14), une conduite de bière (15) pour de la bière à filtrer et/ou de la bière stabilisante ; et/ou une conduite de bière (16) destinée à relier des cuves à bière entre elles.

12. Procédé selon la revendication 10 ou 11, dans lequel l'eau de déplacement/de rinçage dégazée (4) est acheminée sélectivement depuis le réservoir d'eau vers un procédé CIP dans une salle de brassage (102) de l'installation de brassage (100) et/ou pour le nettoyage d'une unité de production dans la zone froide (101) de l'installation de brassage (100), notamment pour un rinçage avant et/ou après un nettoyage alcalin ou acide.

13. Procédé selon au moins l'une des revendications 10 à 12, dans lequel de l'eau de brassage destinée à l'empâtage est remplacée au moins en partie par l'eau de déplacement/de rinçage dégazée (4) collectée.

14. Procédé selon au moins l'une des revendications 10 à 13, dans lequel l'eau de déplacement/de rinçage (4) est de l'eau fraîche dégazée dans un procédé de dégazage en amont, notamment jusqu'à une teneur en oxygène d'au plus 0,1 mg/l, et/ou refroidie dans un procédé de refroidissement en amont, notamment jusqu'à une température d'au plus 8°C.

15. Procédé selon au moins l'une des revendications 10 à 14, dans lequel l'eau de déplacement/de rinçage dégazée (4) est présente du fait d'un déplacement de produit ou de liquide de nettoyage dans la conduite de produit respective (2).
